# EUROPÄISCHE PATENTSCHRIFT

(11) **EP 3 500 832 B1**
(45) Veröffentlichungstag und Bekanntmachung des Hinweises auf die Patenterteilung: **02.09.2020**
(21) Anmeldenummer: 17743031.1
(22) Anmeldetag: 25.07.2017
(51) Int. Cl.: G01L 19/04, G01L 19/14

(54) **FÜLLKÖRPER ZUR REDUKTION EINES VOLUMENS EINER DRUCKMESSKAMMER**
FILLING BODY FOR REDUCING A VOLUME OF A PRESSURE MEASUREMENT CHAMBER
CORPS DE REMPLISSAGE SERVANT À LA RÉDUCTION D'UN VOLUME D'UNE CHAMBRE DE MESURE DE PRESSION

(30) Priorität: 16.08.2016 DE 102016115197
(43) Veröffentlichungstag der Anmeldung: 26.06.2019
(73) Patentinhaber: Endress+Hauser SE+Co. KG, 79689 Maulburg (DE)
(72) Erfinder: SIXTENSSON, Daniel, 14469 Potsdam (DE); HAKER, Fred, 14532 Kleinmachnow (DE); MÜLLER, Dennis, 14550 Groß Kreutz OT (DE)
(74) Vertreter: Andres, Angelika Maria
(86) Internationale Anmeldenummer: PCT/EP2017/068711
(87) Internationale Veröffentlichungsnummer: WO 2018/033348

(56) Entgegenhaltungen:
- DE-A1-102006 013 414
- DE-A1-102006 057 828
- JP-A- H10 122 997
- JP-A- 2008 128 644
- US-A- 4 502 335

## Beschreibung

Die Erfindung betrifft einen Füllkörper zur Reduktion eines mit einer Druck übertragenden Flüssigkeit zu befüllenden Volumens einer einen Drucksensor umgebenden Druckmesskammer.

In der industriellen Druckmesstechnik werden unter anderem als Absolut-, Relativ- oder Differenzdrucksensoren ausgebildete, häufig auch als Halbleitersensoren oder Sensor-Chips bezeichnete Drucksensoren eingesetzt, die unter Verwendung von aus der Halbleitertechnologie bekannten Prozessen hergestellt werden. Diese Drucksensoren sind mechanisch empfindlich und werden deshalb regelmäßig in eine mit einer Druck übertragenden Flüssigkeit gefüllte Druckmesskammer eingesetzt. Dort werden sie über eine an die Druckmesskammer angeschlossene Druckzufuhr, z.B. einen vorgeschalteten Druckmittler, mit einem vom Drucksensor zu erfassenden Druck beaufschlagt. Zur Bewirkung einer möglichst unverfälschten Druckübertragung werden hierzu möglichst inkompressible, einen geringen thermischen Ausdehnungskoeffizienten aufweisende Flüssigkeiten, wie z. B. Silikonöle, eingesetzt. Auch diese Flüssigkeiten weisen jedoch von der Temperatur und vom zu übertragenden Druck abhängige Druckübertragungseigenschaften auf, deren Einfluss auf die erzielbare Messgenauigkeit umso größer, je größer das benötigte Flüssigkeitsvolumen ist. Aus diesem Grund werden in manchen Druckmesseinrichtungen Füllkörper eingesetzt, die das mit der Flüssigkeit zu befüllende Volumen verkleinern.

In der DE 10 2006 057 828 A1 ist ein Differenzdruckmessaufnehmer beschrieben, der eine in einem massiven metallischen Block vorgesehene Ausnehmung umfasst, in die ein außenseitlich von einem im Schnitt zylindrischen Passstück umgebener Glaskörper eingesetzt ist. Der Glaskörper weist eine Ausnehmung auf, in ein Differenzdrucksensor eingesetzt ist, der eine unter Einschluss einer Druckkammer auf einem Grundkörper angeordnete Messmembran umfasst. Der elektrische Anschluss des Differenzdrucksensors erfolgt über Anschlussleitungen, die in den Glaskörper druckdicht eingeglast sind. Der Druckmessaufnehmer umfasst einen ersten Druckmittler, über den eine die Außenseite der Messmembran umgebende Druckmesskammer mit einem ersten Druck beaufschlagt wird. Zugleich wird die unter der Messmembran eingeschlossene Druckkammer über einen zweiten Druckmittler mit einem zweiten Druck beaufschlagt. Bei diesem Druckmessaufnehmer füllt der Passkörper zusammen mit dem damit verbundenen Glaskörper den Innenraum der Ausnehmung im massiven Block des Messaufnehmers vollständig aus, so dass in der an die Druckmesskammer angrenzenden Ausnehmung nur ein innerhalb der Ausnehmung im Glaskörper den Differenzdrucksensor umgebender Spalt mit der Druck übertragenden Flüssigkeit befüllt werden muss. Dabei besteht jedoch die Gefahr, dass durch unterschiedliche thermischen Ausdehnungskoeffizienten des massiven Blocks, des Passkörpers, des Glaskörper und des Drucksensors thermomechanische Spannungen entstehen können, die nicht nur den Glaskörper belasten, sondern sich auch nachteilig auf die Messeigenschaften des Drucksensors auswirken können.

Ein hierzu komplementärer Ansatz wird bei der in der US-A 4,502,335 beschriebenen Druckmesseinrichtung verfolgt. Diese umfasst ein Gehäuse mit einer darin eingeschlossenen Druckmesskammer, in der ein auf einem Träger montierter Drucksensor außenseitlich, allseitig von einem hohlzylindrischen, frei schwebend montierten Füllkörper umgeben ist. Hierzu sind im Träger Durchführungen vorgesehen, in die stabförmige Anschlussleitungen für den elektrischen Anschluss des Drucksensors eingesetzt sind, die den Füllkörper tragen. Die Anschlussleitungen verlaufen durch im Füllkörper vorgesehene Bohrungen durch den Füllkörper hindurch auf die vom Träger abgewandte Seite des Füllkörpers, wo sie durch den Füllkörper tragende Lötungen mit dem Füllkörper verbunden sind.

Diese frei schwebende Montage des Füllkörpers bietet den Vorteil, dass über den Füllkörper praktische keine auf unterschiedliche thermische Ausdehnungskoeffizienten von Gehäuse, Träger, Füllkörper und/oder Drucksensor zurückzuführende thermomechanischen Spannungen induziert und/oder übertragen werden, die die Durchführungen im Träger und/oder den Drucksensor belasten.

Außerdem kann der Füllkörper deutlich einfacher und kostengünstiger hergestellt werden, als in ein Passstück eingesetzte Glaskörper mit darin druckfest eingeglasten Anschlussleitungen.

Allerdings müssen Füllkörper und Drucksensor hier getrennt voneinander montiert werden. Dabei müssen sie räumlich sehr präzise zueinander ausgerichtet werden, um eine Berührung von Füllkörper und Drucksensor zu vermeiden, die sich nachteilig auf die Messeigenschaften des Drucksensors auswirken würde.

Darüber hinaus können aufgrund der für die Sensormontage erforderlichen mechanischen Verbindung zwischen Träger und Drucksensor thermomechanische Spannungen auftreten, die sich auf das Übertragungsverhalten der Messmembran des Drucksensors auswirken und die erzielbare Messgenauigkeit und deren Reproduzierbarkeit verschlechtern.

Eine z.B. in der DE 34 36 440 A1 beschriebene Lösung des letztgenannten Problems besteht darin, den Drucksensor auf dem Träger auf einem freistehenden Sockel zu montieren, dessen Grundfläche kleiner als die Grundfläche des darauf montierten Drucksensors ist. Dabei kann der Sockel integraler Bestandteil des metallischen Trägers sein oder als separates Bauteil ausgebildet sein, das mittels einer Einglasung in eine Bohrung im Träger eingesetzt ist. Eingeglaste Sockel können aus einem Werkstoff bestehen, dessen thermischer Ausdehnungskoeffizient besser an den thermischen Ausdehnungskoeffizienten des Drucksensors angepasst ist, als der des in der Regel metallischen Trägers. Allerdings ist die Anzahl der Werkstoffkombination zwischen denen druckfeste Einglasungen hergestellt werden können begrenzt. Darüber hinaus stellen Einglasungen einen zusätzlichen vergleichsweise aufwendigen Fertigungsschritt dar.

Es ist eine Aufgabe der Erfindung einen Füllkörper anzugeben, der auf einfache und kostengünstige Weise in eine Druckmesskammer eines Druckmessgeräts eingesetzt werden kann und durch den am Einsatzort möglichst wenig thermomechanischen Spannungen verursacht und/oder übertragen werden, die sich nachteilig auf die Messeigenschaften eines in der Druckmesskammer angeordneten Drucksensors auswirken.

Hierzu umfasst die Erfindung einen Füllkörper zur Reduktion eines mit einer Druck übertragenden Flüssigkeit zu befüllenden Volumens einer einen Drucksensor umgebenden Druckmesskammer, mit
- einer Ausnehmung zur Aufnahme des Drucksensors, und
- einem in die Ausnehmung hinein ragenden, freistehenden Sockel auf dem der Drucksensor in der Ausnehmung montiert werden kann,
   wobei
- auf einer von der Ausnehmung abgewandten Seite des Füllkörpers ein den Füllkörper tragender Füllkörperfuß zum Montieren des Füllkörpers an einem Einsatzort vorgesehen ist, dessen Grundfläche kleiner als eine Grundfläche eines an den Füllkörperfuß angrenzenden, die Ausnehmung umfassenden Füllkörperbereichs ist, sodass der Füllkörperfuß den ansonsten frei stehenden Füllkörper trägt.

Erfindungsgemäße Füllkörper bieten den Vorteil, dass sie sowohl die Funktionalität eines Füllkörper als auch die eines den Drucksensor tragenden Elements übernehmen.

Darüber hinaus bieten sie den Vorteil, dass durch die über den Füllkörperfuß ermöglichte freistehende Montage des Füllkörpers am Einsatzort durch den Füllkörper verursachte und/oder über den Füllkörper übertragbare Spannungen reduziert werden.

Des Weiteren bieten sie den Vorteil, dass sie als einteilige rein mechanische Bauteile auf einfache und kostengünstige Weise hergestellt, mit dem Drucksensor ausgestattet und am Einsatzort montiert werden können.

Eine erste Weiterbildung zeichnet sich dadurch aus, dass der Füllkörper aus einem Isolator, insb. aus Keramik, insb. aus Aluminiumoxid, Siliziumnitrid (Si₃N₄) oder Siliziumkarbid (SiC) besteht.

Eine zweite Weiterbildung zeichnet sich dadurch aus, dass
- der Füllkörperfuß ein in einer parallel zur Längsachse des Sockels verlaufenden Richtung eine Höhe von größer gleich 0,4 mm aufweist, und/oder
- die Grundfläche des Füllkörperfußes kleiner als eine Grundfläche der Ausnehmung im Füllkörper, größer als eine Grundfläche des Sockels (5) und/oder größer als eine Mindestfläche von 2 mm² ist.

Eine dritte Weiterbildung zeichnet sich dadurch aus, dass auf einer vom Füllkörperfuß abgewandten Seite des Füllkörpers elektrisch leitfähige Kontaktflächen, insb. als Metallisierung aufgebrachte Kontaktflächen zum elektrischen Anschließen eines auf dem Füllkörper montierbaren Funktionselements, insb. ein Sensoranschluss des auf dem Sockel montierbaren Drucksensors oder ein Funktionselementanschluss eines weiteren auf dem Füllkörper montierbaren Funktionselements über jeweils eine Leitung, insb. einen Bonddraht, vorgesehen sind.

Eine erste Ausgestaltung zeichnet sich dadurch aus, dass außerhalb der Ausnehmung durch den Füllkörper hindurch verlaufende Bohrungen vorgesehen sind, durch die jeweils eine an einen elektrischen Anschluss eines auf dem Füllkörper montierbaren Funktionselements, insb. einen Sensoranschluss des Drucksensors oder einen Funktionselementanschluss eines weiteren Funktionselements, anschließbare Anschlussleitung hindurch geführt werden kann.

Eine vierte Weiterbildung zeichnet sich dadurch aus, dass auf einer vom Füllkörperfuß abgewandten Seite ein an den die Ausnehmung im Füllkörper umgebenden Füllkörperbereich angeformter Fortsatz vorgesehen ist, insb. ein im Wesentlichen scheibenförmiger Fortsatz, dessen Scheibendicke geringer als eine Höhe des die Ausnehmung umgebenden Füllkörperbereichs ist und dessen vom Füllkörperfuß abgewandte Oberfläche in der gleichen Ebene liegt, wie die vom Füllkörperfuß abgewandte Oberfläche des daran angrenzenden Füllkörperbereichs.

Eine Weiterbildung des Füllkörpers gemäß der ersten Ausgestaltung und der vierten Weiterbildung zeichnet sich dadurch aus, dass die Bohrungen im Bereich des Fortsatzes durch den Füllkörper hindurch verlaufen.

Eine zweite Ausgestaltung zeichnet sich dadurch aus, dass
- der frei stehende Sockel eine Länge in der Größenordnung von 0,5 mm, aufweist, und/oder
- der Sockel eine Grundfläche aufweist, die kleiner als eine Grundfläche des darauf zu montierenden Drucksensors ist, wobei der Sockel insb. eine kreis- oder kreisringförmige Grundfläche mit einem Außendurchmesser im Bereich von 0,5 mm bis 7 mm oder eine quadratische oder rechteckförmige Grundfläche mit Seitenlängen im Bereich von 0,5 mm bis 7 mm aufweist.

Weiter umfasst die Erfindung ein Druckmessmodul mit einem erfindungsgemäßen Füllkörper, das sich dadurch auszeichnet, dass in der Ausnehmung des Füllkörpers ein Drucksensor angeordnet ist, der mittels einer Fügung, insb. einer Klebung, auf dem Sockel montiert ist.

Erfindungsgemäße Druckmessmodule bieten den Vorteil, dass sie als modulare Einheit zur Verfügung stehen, deren elektrischen und/oder mechanischen Eigenschaften getestet, insb. bestimmt und/oder überprüft, werden können, bevor sie als modulare Einheit am Einsatztort montiert werden.

Darüber hinaus bieten sie den Vorteil, dass sie über deren Füllkörperfuß am Einsatzort montiert werden können, ohne dass der Montagevorgang einen nennenswerten Einfluss auf die Druckmesseigenschaften des darin auf dem Sockel montierten Drucksensors hat. Da der Drucksensor Teil des Druckmessmoduls ist, ist bei der Montage am Einsatzort keine extrem präzise Ausrichtung des Füllkörpers bzw. des Druckmessmoduls erforderlich.

Eine erste Weiterbildung des Druckmessmoduls zeichnet sich dadurch aus, dass auf dem Füllkörper zusätzlich zu dem Drucksensor noch mindestens ein weiteres Funktionselement, insb. ein Temperatursensor und/oder ein Absolutdrucksensor, insb. ein auf einer vom Füllkörperfuß abgewandten Stirnfläche des Füllkörpers angeordnetes Funktionselement und/oder ein in einer auf einer vom Füllkörperfuß abgewandten Seite des Füllkörpers vorgesehenen Ausnehmung angeordnetes Funktionselement, vorgesehen ist.

Eine weitere Weiterbildung des Druckmessmodul oder dessen erster Weiterbildung zeichnet sich dadurch aus, dass
- auf einer vom Füllkörperfuß abgewandten Seite des Füllkörpers elektrisch leitfähige Kontaktflächen, insb. als Metallisierung aufgebrachte Kontaktflächen, vorgesehen sind, und
- elektrische Anschlüsse mindestens eines auf dem Füllkörper vorgesehenen Funktionselements, insb. Sensoranschlüsse des Drucksensors und/oder Funktionselementanschlüsse mindestens eines weiteren auf dem Füllkörper angeordneten Funktionselements, jeweils über eine Leitung, insb. einen Bonddraht, mit einer der Kontaktflächen verbunden sind und über die jeweilige Kontaktfläche elektrisch anschließbar sind, insb. an eine Messeinrichtung oder eine Testeinrichtung anschließbar sind.

Weiter umfasst die Erfindung eine Druckmesseinrichtung mit einem erfindungsgemäßen Druckmessmodul, das sich dadurch auszeichnet, dass
- das Druckmessmodul auf einem Träger, insb. einem metallischen Träger, in eine von einem Gehäuse umgebene Druckmesskammer eingesetzt ist,
- der Füllkörper mittels einer den Füllkörperfuß mit dem Träger verbindenden Fügung, insb. einer Klebung, freistehend auf dem auf dem Träger montiert ist,
- die Sensoranschlüsse des Drucksensors jeweils über eine Leitung unmittelbar mit einer zughörigen Anschlussleitung, insb. einer starren, gerade Anschlussleitung, insb. einem Anschlussstift, verbunden sind oder über die Leitung mit einer auf dem Füllkörper angeordneten Kontaktfläche verbunden sind, die über eine weitere Leitung mit der Anschlussleitung verbunden ist, und
- die Anschlussleitungen durch eine im Träger vorgesehene elektrisch isolierende Durchführung und eine durch den Füllkörper hindurch verlaufende Bohrung hindurch verlaufen.

Eine erste Weiterbildung der Druckmesseinrichtung zeichnet sich dadurch aus, dass der Träger eine Ausnehmung umfasst, in die der Füllkörperfuß eingesetzt ist.

Eine zweite Weiterbildung der Druckmesseinrichtung zeichnet sich dadurch aus, dass
- der Füllkörper auf einer vom Füllkörperfuß abgewandten Seite einen an dessen die Ausnehmung im Füllkörper umgebenden Füllkörperbereich angeformten Fortsatz umfasst und der Träger einen Trägerbereich umfasst, der einen unter dem Fortsatz des darauf montierten Füllkörpers befindlichen Hohlraum vollständig ausfüllt, und/oder
- der Träger eine Ausnehmung umfasst, in der ein an den Füllkörperfuß angrenzender Füllkörperbereich, insb. der Füllkörperbereich und ein daran angeformter Fortsatz des Füllkörpers, freistehend angeordnet ist, insb. eine Ausnehmung die derart bemessen ist, dass zwischen dem Füllkörper und dem Träger abgesehen von dem mit dem Träger verbundenen Füllköperfuß ein Spalt, insb. ein Spalt mit einer Spaltbreite im Bereich von 50 µm bis 300 µm, besteht.

Weiter umfasst die Erfindung ein Verfahren zur Herstellung von erfindungsgemäßen Druckmesseinrichtungen, das sich dadurch auszeichnet, dass
- aus vorgefertigten Füllkörpern und Drucksensoren Druckmessmodule gefertigt werden, insb. gefertigt und anschließend getestet werden, insb. gefertigt werden, indem die Drucksensoren maschinell auf den Füllkörpern montiert, insb. aufgeklebt, werden,
- die Druckmessmodule jeweils auf einem Träger montiert werden, und
- die Druckmessmodule auf den Trägern jeweils in eine von einem Gehäuse umgebene Druckmesskammer eingesetzt werden.

Die Erfindung und deren Vorteile werden nun anhand der Figuren der Zeichnung, in denen zwei Ausführungsbeispiele dargestellt sind, näher erläutert. Gleiche Elemente sind in den Figuren mit den gleichen Bezugszeichen versehen. Um Bauteile unterschiedlicher Größe darstellen zu können wurde eine nicht immer maßstabsgetreue Darstellung gewählt.
- Fig. 1 zeigt:: einen erfindungsgemäßen Füllkörper;
- Fig. 2 zeigt:: ein auf einem Träger montiertes, den Füllkörper von Fig. 1 umfassendes Druckmessmodul;
- Fig. 3 zeigt:: eine mit dem Druckmessmodul von Fig. 2 ausgestattete Druckmesseinrichtung;
- Fig. 4 zeigt:: eine Draufsicht auf das Druckmessmodul von Fig. 2 und 3;
- Fig. 5 zeigt:: eine Draufsicht auf eine alternative Ausführungsform des Druckmessmoduls von Fig. 2 und 3;
- Fig. 6 zeigt:: einen weiteren erfindungsgemäßen Füllkörper;
- Fig. 7 zeigt:: ein auf einem Träger montiertes, den Füllkörper von Fig. 6 umfassendes Druckmessmodul;
- Fig. 8 zeigt:: eine Draufsicht auf das Druckmessmodul von Fig. 7; und
- Fig. 9 zeigt:: eine mit dem Druckmessmodul von Fig. 7 ausgestattete Druckmesseinrichtung.

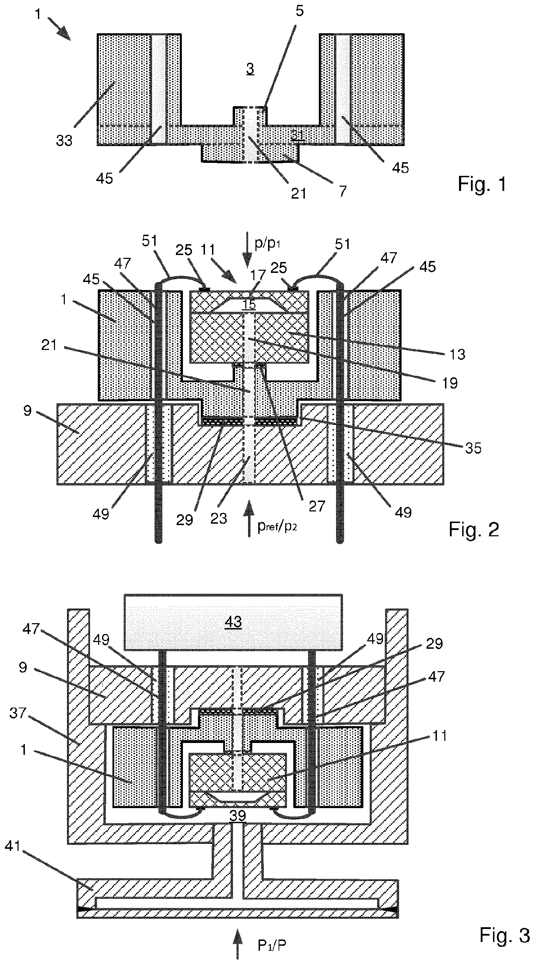

Fig. 1 zeigt ein erstes Ausführungsbeispiel eines erfindungsgemäßen Füllkörpers 1 zur Reduktion eines mit einer Druck übertragenden Flüssigkeit zu befüllenden Volumens einer einen Drucksensor umgebenden Druckmesskammer. Erfindungsgemäße Füllkörper 1 umfassen eine Ausnehmung 3 zur Aufnahme eines Drucksensors und einen in die Ausnehmung 3 hinein ragenden, freistehender Sockel 5 auf dem der Drucksensor in der Ausnehmung 3 montiert werden kann. Darüber hinaus umfassen sie einen auf deren von der Ausnehmung 3 abgewandten Seite angeordneten, den Füllkörper 1 tragenden Füllkörperfuß 7, über den der Füllkörper 1 derart an einem Einsatzort montierbar ist, dass der Füllkörperfuß 7 den ansonsten frei stehenden Füllkörper 1 trägt.

Des Weiteren umfasst die Erfindung Druckmessmodule, die einen erfindungsgemäßen Füllkörper 1 und einen auf dessen Sockel 5 montierten Drucksensor umfassen. Diese Druckmessmodule können unmittelbar als modulare Einheit in eine Druckmesskammer einer Druckmesseinrichtung eingesetzt werden oder aber vorab auf einem Träger 9 montiert werden, auf dem sie dann in eine Druckmesskammer einer Druckmesseinrichtung eingesetzt werden.

Fig. 2 zeigt hierzu ein auf einem Träger 9 montiertes Druckmessmodul, das den in Fig. 1 dargestellten Füllkörper 1 und einen auf dessen Sockel 5 montierten Drucksensor 11 umfasst. Der Träger 9 besteht z.B. aus einem Metall, insb. aus einem Edelstahl, und ist in dem hier dargestellten Ausführungsbeispiel als im Wesentlichen scheibenförmiger Träger 9 ausgebildet. Fig. 3 zeigt eine Druckmesseinrichtung, die das in Fig. 2 dargestellte auf dem Träger 9 montierte Druckmessmodul umfasst.

Der Drucksensor 11 kann z.B. als Absolut-, Relativ- oder Differenzdrucksensor ausgebildet sein. Als Drucksensoren 11 eignen sich insb. sogenannte Halbleiter-Drucksensoren, z.B. auf Siliziumbasis hergestellten Drucksensor-Chips, die einen Grundkörper 13 und eine unter Einschluss einer Druckkammer 15 mit dem Grundkörper 13 verbundene Messmembran 17 umfassen. Bei als Absolutdrucksensoren ausgebildeten Drucksensoren 11 ist die unter der Messmembran 17 eingeschlossene Druckkammer 15 evakuiert, so dass ein auf die Außenseite der Messmembran 17 einwirkender Druck p eine vom zu messenden Absolutdruck abhängige Durchbiegung der Messmembran 17 bewirkt. Als Relativ- oder Differenzdrucksensoren ausgebildeten Drucksensoren 11 umfassen eine durch den Grundkörper 13 hindurch verlaufende, in der Druckkammer 15 mündende Bohrung 19, über die die Druckkammer 15 mit einem weiteren Druck p_{ref}, p₂ beaufschlagbar ist. Bei der Relativdruckmessung ist das ein Referenzdruck p_{ref}, z.B. ein Atmosphärendruck, bezogen auf den der auf die Außenseite der Messmembran 17 einwirkende Druck p gemessen werden soll. Bei der Differenzdruckmessung ist das ein zweiter Druck p₂, der zusammen mit dem auf die Außenseite der Messmembran 17 einwirkenden ersten Druck p₁ eine von der Differenz der beiden Drücke p₁, p₂ abhängige Auslenkung der Messmembran 17 bewirkt.

In Verbindung mit als Relativ- oder Differenzdrucksensoren ausgebildeten Drucksensoren 11 einsetzbare Füllkörper 1 weisen dementsprechend eine im Füllkörper 1 durch den Sockel 5 hindurch verlaufende, durch den Füllkörper 1 hindurch führende, vorzugsweise ebenfalls als Bohrung ausgebildete Druckzuleitung 21 auf, über die die Druckkammer 15 durch die Bohrung 19 im Grundkörper 13 hindurch mit dem weiteren Druck p_{ref}, p₂ beaufschlagbar ist. Bei dieser Variante ist auch im Träger 9 eine Druckzuleitung 23 vorzusehen, die über die Druckzuleitung 21 im Füllkörper 1 und die Bohrung 19 im Grundkörper 13 mit der Druckkammer 15 verbunden ist. Bohrung 19, Druckzuleitung 21 und Druckzuleitung 23 sind in den Figuren als Variante gestrichtelt dargestellt.

Drucksensoren 11 weisen einen hier nicht im Detail dargestellten elektromechanischen Wandler, z.B. einen kapazitiven oder piezoresistiven Wandler auf, der eine vom auf die Messmembran 17 einwirkenden Druck abhängige Durchbiegung der Messmembran 17 in eine elektrische Größe umwandelt. Diese elektrische Größe wird im Messbetrieb mittels einer an elektrische Sensoranschlüsse 25 des Drucksensors 11 anzuschließenden Messeinrichtung erfasst und in ein vom zu messenden Druck abhängiges elektrisches Signal umgewandelt, das dann zur Anzeige und/oder zur weiteren Verarbeitung zur Verfügung steht.

Erfindungsgemäße Füllkörper 1 bieten den Vorteil, dass sie als einteilige rein mechanische Bauteile auf einfache und kostengünstige Weise hergestellt, mit dem Drucksensor 11 ausgestattet und am Einsatzort montiert werden können. Dabei wird der Drucksensor 11 mittels einer Fügung 27, vorzugsweise einer Klebung, auf dem Sockel 5 befestigt. Dieser Verfahrensschritt kann auf kostengünstige Weise maschinell vorgenommen werden, wobei in einem Arbeitsgang vorzugsweise eine größere Anzahl von Füllkörpern 1 maschinell mit Drucksensoren 11 bestückt wird.

Anschließend steht das den Füllkörper 1 und den darauf montierten Drucksensor 11 umfassende Druckmessmodul als modulare Einheit zur Verfügung, deren elektrischen und/oder mechanischen Eigenschaften getestet, insb. bestimmt und/oder überprüft, werden können, bevor sie als modulare Einheit am Einsatztort montiert werden.

Der Füllkörperfuß 7 ermöglicht eine im Wesentlichen frei stehende Montage des Füllkörpers 1, bei der der Füllkörper 1 ausschließlich über den Füllkörperfuß 7 in direktem mechanischem Kontakt zur Umgebung steht. Das bietet den Vorteil, dass Druckmessmodule über deren Füllkörperfuß 7 am Einsatzort montiert werden können, ohne dass der Montagevorgang einen nennenswerten Einfluss auf die Druckmesseigenschaften des darin auf dem Sockel 5 montierten Drucksensors 11 hat. Da der Drucksensor 11 Teil des Druckmessmoduls ist bei der Montage am Einsatzort keine extrem präzise Ausrichtung des Füllkörpers 1 bzw. des Druckmessmoduls erforderlich.

Erfindungsgemäße Druckmessmodule bieten den Vorteil, dass sie in größeren Stückzahlen vorgefertigt und maschinell auf einer entsprechenden Anzahl von Trägern 9 montiert werden können, indem deren Füllköperfuß 7 über eine Fügung 29, vorzugsweise eine Klebung, mit dem Träger 9 verbunden wird.

Durch die über den Füllkörperfuß 7 ermöglichte freistehende Montage des Druckmessmoduls am Einsatzort wird erreicht, dass durch unterschiedliche thermische Ausdehnungskoeffizienten bedingte thermomechanische Spannungen von außen nur über den Füllkörperfuß 7 auf das Druckmessmodul übertragen werden können.

Darüber hinaus führen in axialer, d.h. parallel zur Längsachse des Sockels 5 verlaufender Richtung erfolgende thermische Ausdehnungen des Füllkörpers 1, sowie in dieser Richtung wirkende, auf oder über den Füllkörper 1 übertragene thermomechanische Spannungen im Wesentlichen nur zu einer axialen Verschiebung des auf dem Sockel 5 montierten Drucksensors 11, die praktisch keinen Einfluss auf die Messeigenschaften des Drucksensors 11 hat.

Dieser Vorteil wird bereits mit einer Ausführungsform erreicht, bei der der Füllkörperfuß durch einen planaren, in Fig. 1 gestrichelt gekennzeichnet Boden 31 eines die Ausnehmung 3 umgebenden Füllkörperbereichs 33 gebildet ist.

Vorzugsweise weist der Füllkörperfuß 7 jedoch, wie hier dargestellt, eine Grundfläche auf, die kleiner als die Grundfläche des daran angrenzenden, die Ausnehmung 3 umfassenden Füllkörperbereichs 33 ist. Hierdurch reduziert sich die Grundfläche der Fügung 29, über die sich thermomechanische Spannungen ausbilden können und/oder über die thermomechanische Spannungen übertragen werden können. Das ist insb. im Hinblick auf in senkrecht zur Längsachse des Sockels 5 verlaufender Richtung wirkende Spannungen von Vorteil, die andernfalls über den Sockel 5 auf den Drucksensor 11 übertragen werden könnten, wo sie zu einer Veränderung der Messeigenschaften des Drucksensors 11, insb. der druckabhängige Verformbarkeit der Messmembran 17, führen könnten. Dabei kann der vorstehende Füllkörperfuß 7 ohne Weiteres auch eine Grundfläche aufweisen, die kleiner als die Grundfläche der Ausnehmung 3 im Füllkörper 1 ist.

Im Hinblick auf eine selbsttätige Ausrichtung der Füllkörperlängsachse und/oder die Sicherstellung einer möglichst dichten und druckfesten Fügung 29 zwischen Füllkörperfuß 7 und Träger 9 weist der Füllkörperfuß 7 vorzugsweise eine Grundfläche auf, die größer als die Grundfläche des Sockels 5 ist und/oder eine Mindestgröße von 2 mm² nicht unterschreitet.

Grundsätzlich können Füllkörper 1 mit in axialer Richtung vorstehendem Füllkörperfuß 7 auf einer planaren Oberfläche eines Trägers montiert werden. Vorzugsweise wird der vorstehende Füllkörperfuß 7 jedoch in eine hierfür im Träger 9 vorgesehen Ausnehmung 35 eingesetzt. Diese weist vorzugsweise eine Grundfläche auf, die geringfügig größer als die die Grundfläche des Füllkörperfußes 7 ist, so dass der Füllkörperfuß 7 in der Ausnehmung 35 außenseitlich von einem Spalt umgeben ist. Das bietet den Vorteil, dass die über die Fügung 29 auf den Füllkörperfuß 7 übertragene Spannungen zumindest teilweise über die Höhe des freistehenden Füllkörperfußes 7 abgebaut werden können, ohne dass zwischen dem Träger 5 und dem an den Füllkörperfuß 7 angrenzenden Füllkörperbereich 33 ein größerer Hohlraum entsteht, der der Funktion des Füllkörpers 1 zuwider laufen würde. Hierzu weist der Füllkörperfuß 7 vorzugsweise eine Höhe von größer gleich 0,4 mm auf.

Zusätzlich werden die Höhe des Füllkörperfußes 7 und eine Tiefe der Ausnehmung 35 im Träger 9 vorzugsweise derart aufeinander abgestimmt, dass zwischen dem Boden 31 des an den Füllkörperfuß 7 angrenzenden Füllkörperbereichs 33 und dem Träger 9 ein Spalt besteht. Vorzugsweise weist der den Füllkörperfuß 7 außenseitlich umgebende Spalt und/oder auch der Spalt zwischen Träger 9 und Boden 31 eine Spaltbreite auf, die einerseits möglichst klein und andererseits groß genug ist, um sicher zu stellen, dass sich die Bauteile in diesen Bereichen auch bei unterschiedlich starker thermischer Ausdehnung von Füllkörper 1 und Träger 9 nicht berühren. Eine hierzu erforderliche Mindestspaltbreite ist in Abhängigkeit von den Fertigungstoleranzen von Füllkörper 1 und Träger 9, deren thermischen Ausdehnungskoeffizienten, sowie dem Temperaturbereich, in dem das Druckmessmodul einsetzbar ist vorzugeben. Hierzu kann beispielsweise eine Spaltbreite in der Größenordnung von 50 µm bis 300 µm vorgesehen werden.

Grundsätzlich können Sockel 5 und Drucksensor 11 Grundflächen vergleichbarer Größe aufweisen. Zum Schutz des Drucksensors 11 vor thermomechanischen Spannungen weist der Sockel 5 jedoch vorzugsweise eine Grundfläche auf, die kleiner als die Grundfläche des Drucksensors 11 ist. Über diese Geometrie wird eine zusätzliche mechanische Entkopplung des Drucksensors 11 bewirkt, die den Drucksensor 11 vor darauf einwirkenden bzw. darauf übertragbaren thermomechanischen Spannungen schützt.

Halbleiter-Drucksensoren weisen regelmäßig eine - in der Regel rechteckige oder quadratische - Grundfläche auf, deren Größe je nach Messbereich und Messempfindlichkeit in der Größenordnung von 1 mm² bis 100 mm² liegt. In Relation hierzu weist der Sockel 5 vorzugsweise eine kreis- oder kreisringförmige Grundfläche auf, deren Außendurchmesser je nach Größe der Grundfläche des Drucksensors 11 vorzugsweise im Bereich von 0,5 mm bis 7 mm liegt. Alternativ kann der Sockel 5 auch eine quadratische oder rechteckförmige Grundfläche aufweisen, deren Außenseiten Seitenlängen im Bereich von 0,5 mm bis 7 mm aufweisen.

Der freistehende Sockel 5 bietet den Vorteil, dass trotz der über den vorstehenden Füllkörperfuß 7 bewirkten Entkopplung ggfs. auf den Sockel 5 übertragene Spannungen, wie z.B. durch unterschiedliche thermische Ausdehnungskoeffizienten von Füllkörper 1 und Träger 9 bedingte thermomechanische Spannungen, über die gesamte Länge des frei stehenden Sockels 5 abgebaut werden können. Hierzu weist der frei stehende Sockel 5 vorzugsweise eine Länge auf, die größer gleich einigen Zehntelmillimetern ist, z.B. eine Länge in der Größenordnung von 0,5 mm.

Eine weitere Reduktion von am Einsatzort auf den Drucksensor 11 übertragbaren thermomechanischen Spannungen wird vorzugsweise dadurch erzielt, dass sowohl die Fügung 27 zwischen Sockel 5 und Drucksensor 11 als auch die Fügung 29 zwischen Füllkörperfuß 7 und Träger 9 Klebungen sind. Zur Herstellung der Klebungen eignen sich insb. Kleber auf Epoxidharzbasis, thermoplastische Kleber oder Silikon-Kleber, wie zum Beispiel SilikonKautschuk. Klebungen sind deutlich elastischer als starre Verbindungen, wie zum Beispiel Bond-Verbindungen, Lötungen oder Schweißungen, und somit besser in der Lage aufgrund unterschiedlicher thermischer Ausdehnungskoeffizienten von Träger 9 und Füllkörper 1 und/oder Füllkörper 1 und Drucksensor 11 entstehende Spannungen auszugleichen.

Die in Fig. 3 gezeigte Druckmesseinrichtung umfasst ein Gehäuse 37, in dem eine Druckmesskammer 39 eingeschlossen ist, die über einen vorgeschalteten Druckmittler 41 mit einem Druck p, p₁ beaufschlagbar ist. Bei diesem Ausführungsbeispiel ist das in Fig. 2 dargestellte, auf dem Träger 9 montierte Druckmessmodul derart in das Gehäuse 37 eingesetzt, dass der Träger 9 die Druckmesskammer 39 nach außen abschließt. Zusätzlich umfasst die Druckmesseinrichtung eine an den Drucksensor 11 angeschlossene Messeinrichtung 43, z.B. eine Messelektronik, die im Messbetrieb den vom Drucksensor 11 messtechnisch erfassten, auf dessen Messmembran 17 einwirkenden Druck bestimmt.

Grundsätzlich kann der elektrische Anschluss des Drucksensors 11 unabhängig vom Füllkörper 1 erfolgen, z.B. indem dessen Sensoranschlüsse 25 über außerhalb des Füllkörpers 1 verlaufende Anschlussleitungen unmittelbar an die Messeinrichtung 43 angeschlossen werden. Vorzugsweise erfolgt der elektrische Anschluss des Drucksensors 11 jedoch durch außerhalb der Ausnehmung 3 durch den Füllkörper 1 hindurch verlaufende Bohrungen 45 hindurch. Dabei wird durch jede Bohrung 45 jeweils eine Anschlussleitung 47 hindurch geführt, die dann auf der vom Füllkörperfuß 7 abgewandten Seite des Füllkörpers 1 mit einem der Sensoranschlüsse 25 verbunden werden kann. Die Anschlussleitungen 47 sind vorzugsweise starre, gerade Leitungen, wie z.B. Anschlussstifte, die jeweils in eine im Träger 9 vorgesehene elektrisch isolierte Durchführung 49 eingesetzt sind, hindurch die sie aus der Druckmesskammer 39 heraus geführt sind.

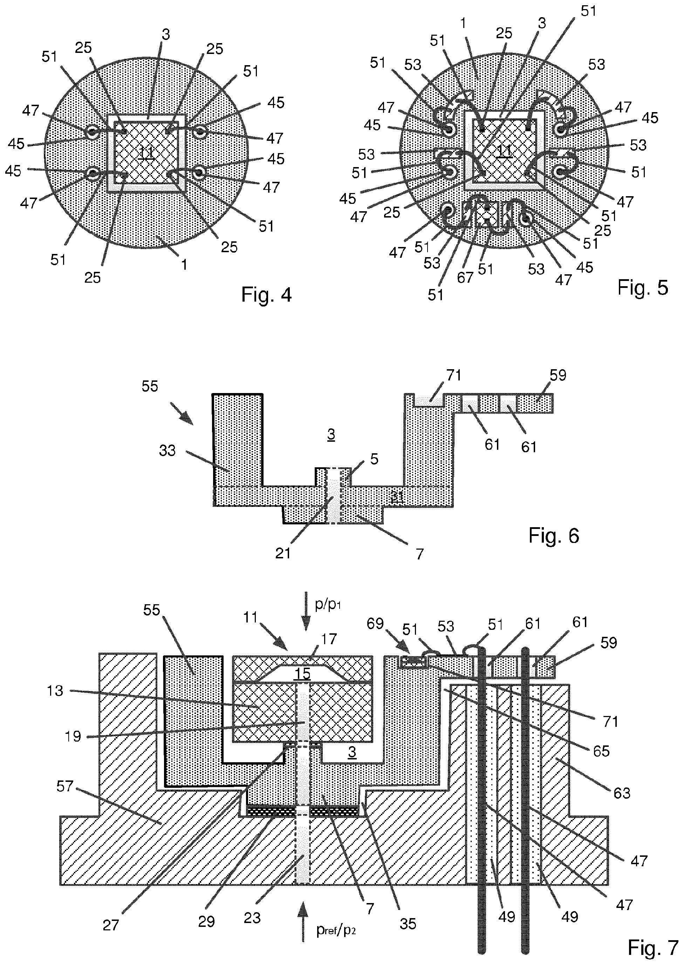

Fig. 4 zeigt hierzu eine Draufsicht auf die vom Füllkörperfuß 7 abgewandte Seite des in Fig. 2 und 3 dargestellten Druckmessmoduls, bei dem die Sensoranschlüsse 25 jeweils über eine Leitung 51, vorzugsweise einen Bonddraht, unmittelbar mit dem aus der Bohrung 45 im Füllkörper 1 herausragenden Ende der zugehörigen Anschlussleitung 47 verbunden sind.

Fig. 5 zeigt eine Draufsicht auf eine alternative Ausführungsform, bei der auf der vom Füllkörperfuß 7 abgewandte Seite des Füllkörpers 1 leitfähige Kontaktflächen 53 angeordnet sind. Als Kontaktflächen 53 eignen sich insb. als Metallisierungen auf die Oberfläche des Füllkörpers 1 aufgebrachte Beschichtungen. Jede dieser Kontaktflächen 53 ist derart positioniert und geformt, dass sie über eine erste Leitung 51, insb. einen Bonddraht, mit einem elektrischen Anschluss eines auf dem Füllkörper 1 montierbaren Funktionselements, z.B. einem der Sensoranschlüsse 25 des Drucksensors 11, verbindbar ist, der dann über die Kontaktfläche 53 elektrisch anschließbar ist. Fig. 5 zeigt hierzu eine Ausführungsform, bei der die über Leitungen 51 mit den Sensoranschlüssen 25 verbundenen Kontaktflächen 53 jeweils über eine weitere Leitung 51, insb. einen weiteren Bonddraht, mit einer durch eine der Bohrungen 45 im Füllkörper 1 durch den Füllkörper 1 hindurch geführten Anschlussleitung 47 verbunden sind.

Kontaktflächen 53 bieten den Vorteil, dass sie als Leitung genutzt werden können, über die die damit verbundenen elektrische Anschlüsse an einem Ort kontaktiert werden können, der sich in einem größeren Abstand von dem jeweiligen Anschluss befindet.

Darüber hinaus bieten sie im Hinblick auf die o.g. Testung von Druckmessmodulen den Vorteil, dass die über Leitungen 51 mit den Kontaktflächen 53 verbundenen elektrischen Anschlüsse während der Testung vorübergehend an eine hier nicht dargestellte Testeinrichtung angeschlossen werden können, die nach Beendigung der Testung wieder entfernt werden kann, ohne dass hierzu eine mechanische Berührung des Funktionselements oder der dessen Anschlüsse mit den Kontaktflächen 53 verbindenden Leitungen 51 erforderlich ist.

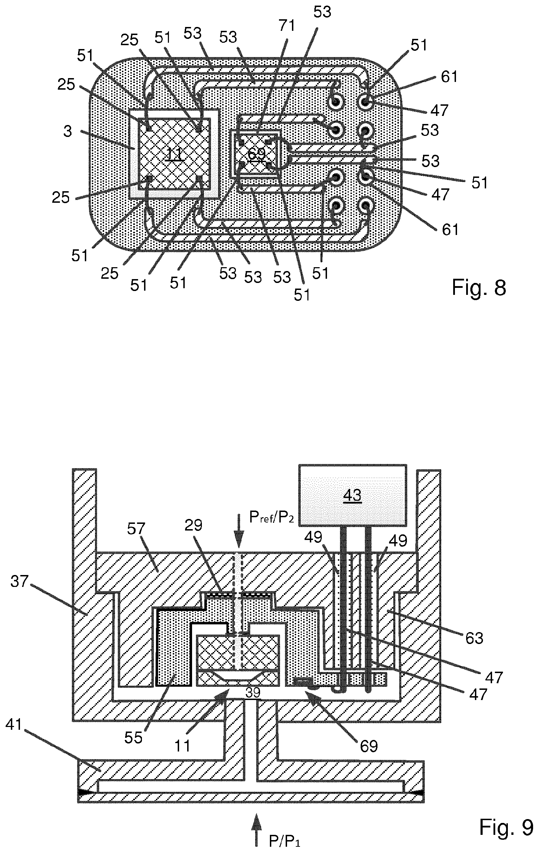

Fig. 6 zeigt ein weiteres Ausführungsbeispiel eines erfindungsgemäßen Füllkörpers 55. Fig. 7 zeigt ein auf einem Träger 57 montiertes Druckmessmodul, das den in Fig. 6 dargestellten Füllkörper 55 und einen auf dessen Sockel 5 montierten Drucksensor 11 umfasst. Fig. 8 zeigt eine Draufsicht auf das in Fig. 7 dargestellte Druckmessmodul. Fig. 9 zeigt eine das Druckmessmodul von Fig.7 umfassende Druckmesseinrichtung. Aufgrund der großen Übereinstimmung zu den entsprechenden zuvor beschriebenen Ausführungsbeispielen werden nachfolgend lediglich die bestehenden Unterschiede beschrieben und im Übrigen auf die Beschreibungen zu den Figuren 1 bis 5 verwiesen.

Der in Fig. 6 dargestellte Füllkörper 55 unterscheidet sich von dem zuvor beschriebenen Füllkörper 1 dadurch, dass er auf dessen vom Füllkörperfuß 7 abgewandten Seite einen an den die Ausnehmung 3 im Füllkörper 55 umgebenden Füllkörperbereich 33 angeformten Fortsatz 59 umfasst. Der Fortsatz 59 ist in dem dargestellten Ausführungsbeispiel im Wesentlichen scheibenförmig und weist eine Scheibendicke auf, die geringer als die Höhe des die Ausnehmung 3 umgebenden Füllkörperbereichs 33 ist. Dabei liegt eine vom Füllkörperfuß 7 abgewandte Oberfläche des Fortsatzes 59 vorzugsweise in der gleichen Ebene, wie die vom Füllkörperfuß 7 abgewandte Oberfläche des daran angrenzenden Füllkörperbereichs 33. Alternativ können aber auch eine andere Formgebung aufweisende Fortsätze eingesetzt werden. Auch der in Fig. 6 bis 9 dargestellte Füllkörper 55 umfasst vorzugsweise durch den Füllkörper 55 hindurch verlaufende Bohrungen 61, in denen für den elektrischen Anschluss des Drucksensors 11 vorgesehen Anschlussleitungen 47 durch den Füllkörper 55 hindurch geführt werden können. Diese Bohrungen können natürlich auch hier in dem die Ausnehmung 3 umgebenden Füllkörperbereich 33 angeordnet sein. Alternativ können die Bohrungen 61 aber auch - wie hier dargestellt - im Bereich des Fortsatzes 59 durch den Füllkörper 55 hindurch verlaufen. Dabei bietet das durch den Fortsatz 59 gegebene zusätzliche Platzangebot den Vorteil, dass die Position der für die Anschlussleitungen 47 im Träger 57 vorzusehenden Durchführungen 49 durch eine entsprechende Formgebung des Fortsatzes 59 und eine entsprechende Positionierung der Bohrungen 61 an ggfs. am Einsatzort bestehende Randbedingungen angepasst werden kann.

Genau wie der in Fig. 5 in der Draufsicht dargestellte Füllkörper 1 ist auch der in Fig. 6 darstellte Füllkörper 55 vorzugsweise mit leitfähigen Kontaktflächen 53 ausgestattet, über die jeweils ein elektrischer Anschluss eines auf dem Füllkörper 55 montierbaren Funktionselements, insb. des Drucksensors 11, auf die bereits in Verbindung mit Fig. 5 beschriebene Weise elektrisch anschließbar ist. Dabei bieten die Kontaktflächen 53 hier den Vorteil, dass über sie problemlos auch größere Abstände zwischen den elektrischen Anschlüssen und den zugehörigen Anschlussleitung 47 überbrückt werden können.

Genau wie der in Fig. 2 dargestellte Träger 9 weist auch der in Fig. 6 dargestellte Träger 57 vorzugsweise eine Ausnehmung 35 auf, in die der Füllkörperfuß 7 vorzugsweise freistehend eingesetzt werden kann. Darüber hinaus umfasst der Träger 57 hier vorzugsweise einen Trägerbereich 63, der einen unter dem Fortsatz 59 des darauf montierten Füllkörpers 55 befindlichen Hohlraum nahezu vollständig ausfüllt. Hierzu kann der Träger 57 z.B. eine an die Ausnehmung 35 angrenzende Ausnehmung 65 zur Aufnahme des an den Füllkörperfuß 7 angrenzenden Füllkörperbereichs 33 und des daran angeformten Fortsatzes 61 umfassen. Auch diese Ausnehmung 65 ist vorzugsweise derart bemessen, dass der Füllkörper 55 derart freistehend in den Träger 57 eingesetzt werden kann, dass zwischen Füllkörper 55 und Träger 57 abgesehen von dem mit dem Träger 57 über die Fügung 29 verbundenen Füllköperfuß 7 auch hier ein Spalt besteht. Auch dieser Spalt weist vorzugsweise eine Spaltbreite auf, die den oben angegebenen Bemessungsregeln entspricht.

Erfindungsgemäße Füllkörper 1, 55 bestehen vorzugsweise aus einem elektrischen Isolator. Das bietet den Vorteil, dass der Füllkörper 1, 55 eine elektrische Isolation des darauf zu montierenden Drucksensors 11 gegenüber der Umgebung bewirkt. Alternativ und/oder zusätzlich hierzu bestehen erfindungsgemäße Füllkörper 1, 55 vorzugsweise aus einem Werkstoff, der einen thermischen Ausdehnungskoeffizienten aufweist, der dem thermischen Ausdehnungskoeffizienten des darauf zu montierenden Drucksensors 11 möglichst ähnlich ist. Das bietet den Vorteil einer weiteren Reduktion von auf den Drucksensor 11 einwirkenden und/oder darauf übertragbaren thermomechanischen Spannungen. Besonders geeignet sind insoweit Keramiken wie z.B. Aluminiumoxid (Al₂O₃), Siliziumnitrid (Si₃N₄) oder Siliziumkarbid (SiC).

Die Funktionalität erfindungsgemäßer Druckmessmodule kann optional dadurch erweitert werden, dass auf dem Füllkörper 1, 55 zusätzlich zu dem Drucksensor 11 mindestens ein weiteres Funktionselement 67, 69 vorgesehen wird. Diese Funktionselemente 67, 69 werden vorzugsweise auf der vom Füllkörperfuß 7 abgewandten Seite des Füllkörpers 1, 55 angeordnet. Dabei bieten Füllkörper 55 mit Fortsatz 59 den Vorteil, dass mehr Platz zur Unterbringung von Funktionselementen zur Verfügung steht.

Fig. 5 zeigt als ein Ausführungsbeispiel ein Funktionselement 67, das unmittelbar auf der vom Füllkörperfuß 7 abgewandten, die Ausnehmung 3 umgebenden Stirnfläche des Füllkörpers 1 angeordnet ist. Diese Variante eignet sich insb. für Funktionselemente 67 mit geringer Bauhöhe. Ein Beispiel hierfür sind Temperatursensoren, wie z.B. das in Fig. 5 nur schematisch dargestellte Thermoelement. Der Temperatursensor kann z. B. dazu verwendet werden eine Temperatur in der unmittelbaren Umgebung des Drucksensors 11 zu messen, anhand derer die Messeinrichtung 43 dann eine Kompensation eines temperaturabhängigen Messfehlers des mit dem Drucksensor 11 gemessenen Drucks ausführt.

Fig. 7 bis 9 zeigen als weiteres Ausführungsbeispiel ein Funktionselemente 69, das in eine auf der vom Füllkörperfuß 7 abgewandten Seite des Füllkörpers 55 vorgesehene Ausnehmung 71 eingesetzt ist. Diese Variante eignet sich insb. für Funktionselemente 69 größerer Bauhöhe, wie z.B. der in Fig. 7 bis 9 als Beispiel dargestellte Absolutdrucksensor. Ein Absolutdrucksensor ist beispielsweise bei in Relativdruck- oder Differenzdruckmesseinrichtungen eingesetzten Druckmessmodulen von Vorteil, wo der damit gemessene Absolutdruck als zusätzlicher Messwert, als Referenzwert und/oder zu einer von der Messeinrichtung 43 ausführbaren Kompensation eines vom Absolutdruck abhängigen Messfehlers des mit dem Drucksensor 11 gemessenen Relativ- oder Differenzdrucks verwendet werden kann.

Der elektrische Anschluss der zusätzlichen Funktionselemente 67, 69 erfolgt vorzugsweise auf die zuvor bereits für den Anschluss des Drucksensors 11 beschriebene Weise. Entsprechend weisen mit mindestens einem zusätzlichen Funktionselement 67, 69 ausgestattete Füllkörper 1, 55 vorzugsweise für jeden Funktionselementanschluss des jeweiligen Funktionselements 67, 69 eine durch den Füllkörper 1, 55 hindurch verlaufende Bohrung 45, 61 auf, in der eine mit dem jeweiligen Funktionselementanschluss zu verbindende Anschlussleitung 47 durch den Füllkörper 1, 55 hindurch geführt werden kann. Dabei können die Funktionselementanschlüsse auch hier entweder unmittelbar oder über eine mit dem jeweiligen Funktionselementanschluss über eine Leitung 51 verbundene Kontaktfläche 53 kontaktiert werden. Die Figuren 5 und 8 zeigen Funktionselementanschlüsse, die jeweils über eine Leitung 51 mit der zugehörigen Kontaktfläche 53 verbunden sind, die wiederum über eine weitere Leitung 51 mit der zugehörigen Anschlussleitung 47 verbunden ist.

Druckmessmodule mit auf deren Füllkörper 1, 55 angeordneten weiteren Funktionselementen 67, 69 bieten den Vorteil, dass die Funktionselemente 67, 69 als Modulbestandteil am Einsatzort oder auf einem am Einsatzort zu montierenden Träger 9, 57 montiert und angeschlossen werden können.

Darüber hinaus können bei einer ggfs. vorgesehenen Testung dieser Druckmessmodule zugleich auch die elektrischen und/oder mechanischen Eigenschaften der weiteren Funktionselemente 67, 67 getestet, insb. bestimmt und/oder überprüft, werden.

| | | |
|---|---|---|
| 1 | Füllkörper | 65 Ausnehmung |
| 3 | Ausnehmung | 67 Funktionselement |
| 5 | Sockel | 69 Funktionselement |
| 7 | Füllkörperfuß | 71 Ausnehmung |
| 9 | Träger | |
| 11 | Drucksensor | |
| 13 | Grundkörper | |
| 15 | Druckkammer | |
| 17 | Messmembran | |
| 19 | Bohrung | |
| 21 | Druckzuleitung | |
| 23 | Druckzuleitung | |
| 25 | Sensoranschluss | |
| 27 | Fügung (Sockel /Sensor) | |
| 29 | Fügung (Füllkörper/ Träger | |
| 31 | Boden | |
| 33 | Füllkörperbereich | |
| 35 | Ausnehmung | |
| 37 | Gehäuse | |
| 39 | Druckmesskammer | |
| 41 | Druckmittler | |
| 43 | Messeinrichtung | |
| 45 | Bohrung | |
| 47 | Anschlussleitung | |
| 49 | Durchführung | |
| 51 | Leitung | |
| 53 | Kontaktfläche | |
| 55 | Füllkörper | |
| 57 | Träger | |
| 59 | Fortsatz | |
| 61 | Bohrung | |
| 63 | Trägerbereich | |

## Patentansprüche

1. Füllkörper zur Reduktion eines mit einer Druck übertragenden Flüssigkeit zu befüllenden Volumens einer einen Drucksensor (11) umgebenden Druckmesskammer (39), mit
- einer Ausnehmung (3) zur Aufnahme des Drucksensors (11), und
- einem in die Ausnehmung (3) hinein ragenden, freistehender Sockel (5), auf dem der Drucksensor (11) in der Ausnehmung (3) montiert werden kann,
wobei
- auf einer von der Ausnehmung (3) abgewandten Seite des Füllkörpers (1, 55) ein den Füllkörper (1) tragender Füllkörperfuß (7) zum Montieren des Füllkörpers an einem Einsatzort vorgesehen ist, dessen Grundfläche kleiner als eine Grundfläche eines an den Füllkörperfuß (7) angrenzenden, die Ausnehmung (3) umfassenden Füllkörperbereichs (33) ist, sodass der Füllkörperfuß (7) den ansonsten frei stehenden Füllkörper (1) trägt.

2. Füllkörper gemäß Anspruch 1, **dadurch gekennzeichnet, dass** der Füllkörper (1, 55) aus einem Isolator, insb. aus Keramik, insb. aus Aluminiumoxid (Al₂O₃), Siliziumnitrid (Si₃N₄) oder Siliziumkarbid (SiC) besteht.

3. Füllkörper gemäß Anspruch 1, **dadurch gekennzeichnet, dass**
- der Füllkörperfuß (7) ein in einer parallel zur Längsachse des Sockels (5) verlaufenden Richtung eine Höhe von größer gleich 0,4 mm aufweist, und/oder
- die Grundfläche des Füllkörperfußes (7) kleiner als eine Grundfläche der Ausnehmung (3) im Füllkörper (1, 55), größer als eine Grundfläche des Sockels (5) und/oder größer als eine Mindestfläche von 2 mm² ist.

4. Füllkörper gemäß Anspruch 1, **dadurch gekennzeichnet, dass** auf einer vom Füllkörperfuß (7) abgewandten Seite des Füllkörpers (1, 55) elektrisch leitfähige Kontaktflächen (53), insb. als Metallisierung aufgebrachte Kontaktflächen (53) zum elektrischen Anschließen eines auf dem Füllkörper (1, 55) montierbaren Funktionselements, insb. ein Sensoranschluss (25) des auf dem Sockel (5) montierbaren Drucksensors (11) oder ein Funktionselementanschluss eines weiteren auf dem Füllkörper (1, 55) montierbaren Funktionselements (67, 69) über jeweils eine Leitung (51), insb. einen Bonddraht, vorgesehen sind.

5. Füllkörper gemäß Anspruch 1, **dadurch gekennzeichnet, dass** außerhalb der Ausnehmung (3) durch den Füllkörper (1) hindurch verlaufende Bohrungen (45, 61) vorgesehen sind, durch die jeweils eine an einen elektrischen Anschluss eines auf dem Füllkörper (1, 55) montierbaren Funktionselements, insb. einen Sensoranschluss (25) des Drucksensors (11) oder einen Funktionselementanschluss eines weiteren Funktionselements (67, 69), anschließbare Anschlussleitung (47) hindurch geführt werden kann.

6. Füllkörper gemäß Anspruch 1, **dadurch gekennzeichnet, dass** auf einer vom Füllkörperfuß (7) abgewandten Seite ein an den die Ausnehmung (3) im Füllkörper (55) umgebenden Füllkörperbereich (33) angeformter Fortsatz (59) vorgesehen ist, insb. ein im Wesentlichen scheibenförmiger Fortsatz (59), dessen Scheibendicke geringer als eine Höhe des die Ausnehmung (3) umgebenden Füllkörperbereichs (33) ist und dessen vom Füllkörperfuß (7) abgewandte Oberfläche in der gleichen Ebene liegt, wie die vom Füllkörperfuß (7) abgewandte Oberfläche des daran angrenzenden Füllkörperbereichs (33).

7. Füllkörper gemäß Anspruch 5 und 6, **dadurch gekennzeichnet, dass** die Bohrungen (61) im Bereich des Fortsatzes (59) durch den Füllkörper (55) hindurch verlaufen.

8. Füllkörper gemäß Anspruch1, **dadurch gekennzeichnet, dass**
- der frei stehende Sockel (5) eine Länge in der Größenordnung von 0,5 mm, aufweist, und/oder
- der Sockel (5) eine Grundfläche aufweist, die kleiner als eine Grundfläche des darauf zu montierenden Drucksensors (11) ist, wobei der Sockel (5) insb. eine kreis- oder kreisringförmige Grundfläche mit einem Außendurchmesser im Bereich von 0,5 mm bis 7 mm oder eine quadratische oder rechteckförmige Grundfläche mit Seitenlängen im Bereich von 0,5 mm bis 7 mm aufweist.

9. Druckmessmodul mit einem Füllkörper (1, 55) gemäß Anspruch 1, **dadurch gekennzeichnet, dass** in der Ausnehmung (3) des Füllkörpers (1, 55) ein Drucksensor (11) angeordnet ist, der mittels einer Fügung (27), insb. einer Klebung, auf dem Sockel (5) montiert ist.

10. Druckmessmodul gemäß Anspruch 9, **dadurch gekennzeichnet, dass** auf dem Füllkörper (1, 55) zusätzlich zu dem Drucksensor (11) noch mindestens ein weiteres Funktionselement (67, 69), insb. ein Temperatursensor und/oder ein Absolutdrucksensor, insb. ein auf einer vom Füllkörperfuß (7) abgewandten Stirnfläche des Füllkörpers (1) angeordnetes Funktionselement (67) und/oder ein in einer auf einer vom Füllkörperfuß (7) abgewandten Seite des Füllkörpers (1) vorgesehenen Ausnehmung (71) angeordnetes Funktionselement (69), vorgesehen ist.

11. Druckmessmodul gemäß Anspruch 9 oder 10, **dadurch gekennzeichnet, dass**
- auf einer vom Füllkörperfuß (7) abgewandten Seite des Füllkörpers (1, 55) elektrisch leitfähige Kontaktflächen (53), insb. als Metallisierung aufgebrachte Kontaktflächen (53), vorgesehen sind, und
- elektrische Anschlüsse mindestens eines auf dem Füllkörper (1, 55) vorgesehenen Funktionselements, insb. Sensoranschlüsse (25) des Drucksensors (11) und/oder Funktionselementanschlüsse mindestens eines weiteren auf dem Füllkörper (1, 55) angeordneten Funktionselements (67, 69), jeweils über eine Leitung (51), insb. einen Bonddraht, mit einer der Kontaktflächen (53) verbunden sind und über die jeweilige Kontaktfläche (53) elektrisch anschließbar sind, insb. an eine Messeinrichtung (43) oder eine Testeinrichtung anschließbar sind.

12. Druckmesseinrichtung mit einem Druckmessmodul gemäß Anspruch 9, **dadurch gekennzeichnet, dass**
- das Druckmessmodul auf einem Träger (9, 57), insb. einem metallischen Träger (9, 57), in eine von einem Gehäuse (37) umgebene Druckmesskammer (39) eingesetzt ist,
- der Füllkörper (1, 55) mittels einer den Füllkörperfuß (7) mit dem Träger (9, 57) verbindenden Fügung (29), insb. einer Klebung, freistehend auf dem auf dem Träger (9, 57) montiert ist,
- die Sensoranschlüsse (25) des Drucksensors (11) jeweils über eine Leitung (51) unmittelbar mit einer zughörigen Anschlussleitung (47), insb. einer starren, gerade Anschlussleitung (47), insb. einem Anschlussstift, verbunden sind oder über die Leitung (51) mit einer auf dem Füllkörper (1, 55) angeordneten Kontaktfläche (53) verbunden sind, die über eine weitere Leitung (51) mit der Anschlussleitung (47) verbunden ist, und
- die Anschlussleitungen (47) durch eine im Träger (9, 57) vorgesehene elektrisch isolierende Durchführung (49) und eine durch den Füllkörper (1, 55) hindurch verlaufende Bohrung (45, 61) hindurch verlaufen.

13. Druckmesseinrichtung gemäß Anspruch 12, **dadurch gekennzeichnet, dass** der Träger (9, 57) eine Ausnehmung (35) umfasst, in die der Füllkörperfuß (7) eingesetzt ist.

14. Druckmesseinrichtung gemäß Anspruch 12, **dadurch gekennzeichnet, dass**
- der Füllkörper (55) auf einer vom Füllkörperfuß (7) abgewandten Seite einen an dessen die Ausnehmung (3) im Füllkörper (55) umgebenden Füllkörperbereich (33) angeformten Fortsatz (59) umfasst und der Träger (57) einen Trägerbereich (63) umfasst, der einen unter dem Fortsatz (59) des darauf montierten Füllkörpers (55) befindlichen Hohlraum vollständig ausfüllt, und/oder
- der Träger (57) eine Ausnehmung (65) umfasst, in der ein an den Füllkörperfuß (7) angrenzender Füllkörperbereich (33), insb. der Füllkörperbereich (33) und ein daran angeformter Fortsatz (61) des Füllkörpers (55), freistehend angeordnet ist, insb. eine Ausnehmung (65) die derart bemessen ist, dass zwischen dem Füllkörper (55) und dem Träger (57) abgesehen von dem mit dem Träger (57) verbundenen Füllköperfuß (7) ein Spalt, insb. ein Spalt mit einer Spaltbreite im Bereich von 50 µm bis 300 µm, besteht.

15. Verfahren zur Herstellung von Druckmesseinrichtungen gemäß Anspruch 12, **dadurch gekennzeichnet, dass**
- aus vorgefertigten Füllkörpern (1, 55) und Drucksensoren (11) Druckmessmodule gefertigt werden, insb. gefertigt und anschließend getestet werden, insb. gefertigt werden, indem die Drucksensoren (11) maschinell auf den Füllkörpern (1, 55) montiert, insb. aufgeklebt, werden,
- die Druckmessmodule jeweils auf einem Träger (9, 57) montiert werden, und
- die Druckmessmodule auf den Trägern (9, 57) jeweils in eine von einem Gehäuse (37) umgebene Druckmesskammer (39) eingesetzt werden.

## Claims

1. Filler body designed to reduce a volume of a pressure measuring chamber (39) surrounding a pressure sensor (11), said volume to be filled with a liquid that transfers a pressure,
with
- a recess (3) designed to receive the pressure sensor (11), and
- a free-standing base (5), which projects into the recess (3) and on which the pressure sensor (11) can be mounted in the recess (3),
wherein
- a filler body foot (7) is provided on a side of the filler body (1, 55) facing away from the recess (3), said filler body foot (7) supporting the filler body (1) and being designed to mount the filler body at an application location, whose basic surface is less than a basic surface of an area of the filler body (33) surrounding the recess (3) and adjacent to the filler body foot (7) in such a way that the filler body foot (7) supports the filler body (1) which is otherwise freestanding.

2. Filler body as claimed in Claim 1, **characterized in that** the filler body (1, 55) is made from an isolator, particularly ceramic, particularly aluminum oxide (Al₂O₃), silicon nitride (Si₃N₄) or silicon carbide (SiC).

3. Filler body as claimed in Claim 1, **characterized**
- **in that** the filler body foot (7) has a height greater than or equal to 0.4 mm in a direction parallel to the longitudinal axis of the base (5), and/or
- the basic surface of the filler body foot (7) is less than a basic surface of the recess (3) in the filler body (1, 55), greater than a basic surface of the base (5) and/or greater than a minimum surface of 2 mm².

4. Filler body as claimed in Claim 1, **characterized in that** electrically conductive contact surfaces (53) are provided on a side of the filler body (1, 55) situated opposite the filler body foot (7), particularly contact surfaces (53) applied in the form of a metallization and designed for the electrical connection of a functional element which can be mounted on the filler body (1, 55), particularly a sensor connection (25) of the pressure sensor (11) which can be mounted on the base (5) or a functional element connection of another functional element (67, 69) which can be mounted on the filler body (1, 55) via a cable (51), particularly a bond wire.

5. Filler body as claimed in Claim 1, **characterized in that** boreholes (45, 61) that pass through the filler body (1) are provided outside the recess (3), wherein a connecting cable can be routed through each bore hole, wherein said connecting cable (47) can be connected to an electrical connection of a functional element that can be mounted on the filler body (1, 55), particularly a sensor connection (25) of the pressure sensor (11) or a functional element connection of another functional element (67, 69).

6. Filler body as claimed in Claim 1, **characterized in that** an extension (59) is provided on a side facing away from the filler body foot (7), said extension being formed on the area of the filler body (33) surrounding the recess (3) present in the filler body (55), particularly an extension (59) that is essentially in the form of a disk, whose disk thickness is less than a height of the area of the filler body (33) surrounding the recess (3) and whose surface facing away from the filler body foot (7) is located on the same plane as the surface of the adjacent area of the filler body (33) facing away from the filler body foot (7).

7. Filler body as claimed in Claim 5 and 6, **characterized in that** the boreholes (61) pass through the filler body (55) in the area of the extension (59).

8. Filler body as claimed in Claim 1, **characterized in that**
- the freestanding base (5) has a length in the range of 0.5 mm,
and/or
- the base (5) has a basic surface, which is less than a basic surface of the pressure sensor (11) which is to be mounted thereon, wherein the base (5) particularly has a circular or annular basic surface with an outer diameter in the range between 0.5 mm and 7 mm or a square or rectangular basic surface with side lengths in the range between 0.5 mm and 7 mm.

9. Pressure measuring module with a filler body (1, 55) as claimed in Claim 1, **characterized in that** a pressure sensor (11) is arranged in the recess (3) of the filler body (1, 55), which is mounted on the base (5) via a joining (27), particularly a bond.

10. Pressure measuring module as claimed in Claim 9, **characterized in that** at least another functional element (67, 69) is provided on the filler body (1, 55) in addition to the pressure sensor (11), said additional functional element particularly being a temperature sensor and/or an absolute pressure sensor, particularly a functional element (67) arranged on a front surface of the filler body (1) facing away from the filler body foot (7) and/or a functional element (69) arranged in a recess (71) provided on a side of the filler body (1) facing away from the filler body foot (7).

11. Pressure measuring module as claimed in Claim 9 or 10, **characterized**
- **in that** electrically conductive contact surfaces (53), particularly contact surfaces applied in the form of a metallization, are provided on a side of the filler body (1, 55) facing away from the filler body foot (7), and
- **in that** electrical connections of at least one functional element provided on the filler body (1, 55), particularly sensor connections (25) of the pressure sensor (11) and/or functional element connections at least of one additional functional element (67, 69) arranged on the filler body (1, 55) are connected to one of the contact surfaces (53) via a cable (51), particularly a bond wire, and can be electrically connected via the contact surface (53), and particularly can be connected to a measuring system (43) or a test system.

12. Pressure measuring system with a pressure measuring module as claimed in Claim 9, **characterized**
- **in that** the pressure measuring module is inserted on a support (9, 57), particularly a metal support (9, 57), in a pressure measuring chamber (39) surrounded by a housing (37),
- the filler body (1, 55) is mounted as a freestanding body on the support (9, 57) by means of a joining (29), particularly a bond, connecting the filler body foot (7) to the support (9, 57),
- the sensor connections (25) of the pressure sensor (11) are each directly connected, via a cable (51), with a corresponding connecting cable (47), particularly a rigid, straight connecting cable (47), particularly a connecting pin, or are connected via the cable (51) to a contact surface (53) arranged on the filler body (1, 55), which is connected to the connecting cable (47) via an additional cable (51), and
- the connecting cables (47) run through an electrically isolating feedthrough (49) provided in the support (9, 57) and a borehole (45, 61) passing through the filler body (1, 55).

13. Pressure measuring system as claimed in Claim 12, **characterized in that** the support (9, 57) comprises a recess (35) in which the filler body foot (7) is inserted.

14. Pressure measuring system as claimed in Claim 12, **characterized in that**
- on a side facing away from the filler body foot (7), the filler body (55) comprises an extension (59) formed on the area of the filler body (33) surrounding the recess (3) that is present in the filler body (55), and **in that** the support (57) comprises a support area (63) which entirely fills a cavity which is situated under the extension (59) of the filler body (55) which is mounted thereon, and/or
- the support (57) comprises a recess (65) in which an area of the filler body (33) adjacent to the filler body foot (7), particularly the area of the filler body (33) and an extension (61) of the filler body (55) which is formed thereon, is arranged in freestanding manner, particularly a recess (65) which is sized in such a way that there is a gap, particularly a gap with a gap width in the range between 50 µm and 300 µm, between the filler body (55) and the support (57), except for the filler body foot (7) connected to the support (57).

15. Procedure for the production of pressure measuring systems as claimed in Claim 12, **characterized in that**
- pressure measuring modules are made from prefabricated filler bodies (1, 55) and pressure sensors (11), particularly made and subsequently tested, particularly made in such a way that the pressure sensors (11) are mounted mechanically on the filler bodies (1, 55), particularly bonded,
- the pressure measuring modules are each mounted on a support (9, 57), and
- the pressure measuring modules mounted on the supports (9, 57) are each inserted into a pressure measuring chamber (39) surrounded by a housing (37).

## Revendications

1. Corps de remplissage destiné à la réduction d'un volume d'une chambre de mesure de pression (39) entourant un capteur de pression (11), lequel volume doit être rempli d'un liquide transmettant la pression,
avec
- un évidement (3) destiné à la réception du capteur de pression (11), et
- un socle (5) libre, faisant saillie dans l'évidement (3), socle sur lequel peut être monté le capteur de pression (11) dans l'évidement (3),
pour lequel
- est prévu, sur le côté du corps de remplissage (1, 55) situé à l'opposé de l'évidement (3), un pied de corps de remplissage (7) supportant le corps de remplissage (1) et destiné au montage du corps de remplissage sur un emplacement d'utilisation dont la surface de base est inférieure à une surface de base d'une zone de corps de remplissage (33) entourant l'évidement (3) et adjacente au pied de corps de remplissage (7), de telle sorte que le pied de corps de remplissage (7) supporte le corps de remplissage (1) par ailleurs libre.

2. Corps de remplissage selon la revendication 1, **caractérisé en ce que** le corps de remplissage (1, 55) se compose d'un isolateur, notamment en céramique, notamment en oxyde d'aluminium (Al₂O₃), en nitrure de silicium (Si₃N₄) ou en carbure de silicium (SiC).

3. Corps de remplissage selon la revendication 1, **caractérisé**
- **en ce que** le pied de corps de remplissage (7) présente, dans une direction parallèle à l'axe longitudinal du socle (5), une hauteur supérieure ou égale à 0,4 mm, et/ou
- **en ce que** la surface de base du pied de corps de remplissage (7) est inférieure à une surface de base de l'évidement (3) présent dans le corps de remplissage (1, 55), supérieure à une surface de base du socle (5) et/ou supérieure à une surface minimale de 2 mm².

4. Corps de remplissage selon la revendication 1, **caractérisé en ce que** sont prévues, sur un côté du corps de remplissage (1, 55) situé à l'opposé du pied de corps de remplissage (7), des surfaces de contact électriquement conductrices, notamment des surfaces de contact (53) appliquées sous la forme d'une métallisation et destinées au raccordement électrique d'un élément fonctionnel pouvant être monté sur le corps de remplissage (1, 55), notamment une connexion de capteur (25) du capteur de pression (11) pouvant être monté sur le socle (5) ou une connexion d'élément fonctionnel d'un autre élément fonctionnel (67, 69) pouvant être monté sur le corps de remplissage (1, 55), respectivement par le biais d'un câble (51), notamment un fil de liaison.

5. Corps de remplissage selon la revendication 1, **caractérisé en ce qu'**à l'extérieur de l'évidement (3) sont prévus des perçages (45, 61) traversant le corps de remplissage (1), lesquels perçages permettent de faire passer un câble de raccordement (47) raccordable à une connexion électrique d'un élément fonctionnel pouvant être monté sur le corps de remplissage (1, 55), notamment une connexion de capteur (25) du capteur de pression (11) ou une connexion d'élément fonctionnel d'un autre élément fonctionnel (67, 69).

6. Corps de remplissage selon la revendication 1, **caractérisé en ce que** sur un côté opposé au pied de corps de remplissage (7), il est prévu un prolongement (59) formé sur la zone de corps de remplissage (33) entourant l'évidement (3) présent dans le corps de remplissage (55), notamment un prolongement (59) pour l'essentiel en forme de disque, dont l'épaisseur de disque est inférieure à une hauteur de la zone de corps de remplissage (33) entourant l'évidement (3) et dont la surface située à l'opposé du pied de corps de remplissage (7) se trouve dans le même plan que la surface de la zone de corps de remplissage (33) adjacente à la première surface et qui est située à l'opposé du pied de corps de remplissage (7).

7. Corps de remplissage selon la revendication 5 et 6, **caractérisé en ce que** les perçages (61) passent dans la zone du prolongement (59) à travers le corps de remplissage (55).

8. Corps de remplissage selon la revendication 1, **caractérisé en ce que**
- le socle (5) libre présente une longueur de l'ordre de 0,5 mm,
et/ou
- le socle (5) présente une surface de base, qui est inférieure à une surface de base du capteur de pression (11) qui y est monté, le socle (5) présentant notamment une surface de base circulaire ou cylindrique circulaire avec un diamètre extérieur compris entre 0,5 mm et 7 mm ou une surface de base quadratique ou rectangulaire avec des longueurs des côtés comprises entre 0,5 mm et 7 mm.

9. Module de mesure de pression avec un corps de remplissage (1, 55) selon la revendication 1, **caractérisé en ce qu'**est disposé, dans l'évidement (3) du corps de remplissage (1, 55), un capteur de pression (11), qui est monté au moyen d'une jonction (27), notamment un collage, sur le socle (5).

10. Module de mesure de pression selon la revendication 9, **caractérisé en ce qu'**est prévu sur le corps de remplissage (1, 55), outre le capteur de pression (11), encore au moins un autre élément fonctionnel (67, 69), notamment un capteur de température et/ou un capteur de pression absolue, notamment un élément fonctionnel (67) disposé sur une surface frontale du corps de remplissage (1) située à l'opposé du pied de corps de remplissage (7) et/ou un élément fonctionnel (69) disposé dans un évidement (71) prévu sur un côté du corps de remplissage (1) situé à l'opposé du pied de corps de remplissage (7).

11. Module de mesure de pression selon la revendication 9 ou 10, **caractérisé**
- **en ce que** sont prévues, sur le côté du corps de remplissage (1, 55) situé à l'opposé du pied de corps de remplissage (7), des surfaces de contact électriques (53), notamment des surfaces de contact (53) appliqués sous la forme d'une métallisation, et
- **en ce que** des connexions électriques d'au moins une élément fonctionnel prévu sur le corps de remplissage (1, 55), notamment des connexions de capteur (25) du capteur de pression (11) et/ou des connexions d'élément fonctionnel d'au moins un autre élément fonctionnel (67, 69) disposé sur le corps de remplissage (1, 55), respectivement par le biais d'un câble (51), notamment un fil de liaison, sont reliées avec l'une des surfaces de contact (53) et sont raccordables électriquement via la surface de contact (53) respective, notamment raccordables à un dispositif de mesure (43) ou à un dispositif de test.

12. Dispositif de mesure de pression avec un module de mesure de pression selon la revendication 9, **caractérisé**
- **en ce que** le module de mesure de pression est inséré sur un support (9, 57), notamment un support métallique (9, 57), dans une chambre de mesure de pression (39) entourée par un boîtier (37),
- le corps de remplissage (1, 55) est monté librement sur le support (9, 57) au moyen d'une jonction (29) reliant le pied de corps remplissage (7) avec le support (9, 57), notamment un collage,
- **en ce que** les connexions de capteur (25) du capteur de pression (11) sont reliées respectivement par le biais d'un câble (51) directement avec le câble de raccordement (47) correspondant, notamment un câble de raccordement (47) droit, rigide, notamment une broche de raccordement, ou reliées par le biais du câble (51) avec une surface de contact (53) disposée sur le corps de remplissage (1, 55), laquelle surface de contact est reliée avec le câble de raccordement (47) par le biais d'un câble (51) supplémentaire, et
- **en ce que** les câbles de raccordement (47) passent par une traversée (49) électriquement isolante prévue dans le support (9, 57) et un perçage (45, 61) traversant le corps de remplissage (1, 55).

13. Dispositif de mesure de pression selon la revendication 12, **caractérisé en ce que** le support (9, 57) comprend un évidement (35), dans lequel est inséré le pied du corps de remplissage (7).

14. Dispositif de mesure de pression selon la revendication 12, **caractérisé**
- **en ce que** le corps de remplissage (55) comprend, sur un côté opposé au pied de corps de remplissage (7), un prolongement (59) formé sur sa zone de corps de remplissage (33) entourant l'évidement (3) présent dans le corps de remplissage (55), et en ce que le support (57) comprend une zone de support (63), qui remplit entièrement une cavité située sous le prolongement (59) du corps de remplissage (55) qui y est monté, et/ou
- **en ce que** le support (57) comprend un évidement (65), dans lequel une zone de corps de remplissage (33) adjacente au pied de corps de remplissage (7), notamment la zone de corps de remplissage (33) et un prolongement (61) du corps de remplissage (55) qui y est formé, est disposée librement, notamment un évidement (65), lequel est dimensionné de telle sorte que, abstraction faite du pied de corps de remplissage (7) relié avec le support (57), il existe un espace entre le corps de remplissage (55) et le support (57), notamment un espace d'une largeur comprise entre 50 µm et 300 µm.

15. Procédé destiné à la fabrication de dispositifs de mesure de pression selon la revendication 12, **caractérisé en ce que**
- des modules de mesure de pression sont fabriqués à partir de corps de remplissage préfabriqués (1, 55) et de capteurs de pression (11), lesquels modules sont notamment fabriqués et testés consécutivement, notamment fabriqués **en ce que** les capteurs de pression (11) sont montés mécaniquement sur les corps de remplissage (1, 55), notamment collés,
- les modules de mesure de pression sont chacun montés sur un support (9, 57), et
- les modules de mesure de pression montés sur les supports (9, 57) sont chacun insérés dans une chambre de mesure de pression (39) entourée par un boîtier (37).
